# EUROPEAN PATENT SPECIFICATION

(11) **EP 2 580 372 B1**
(45) Date of publication and mention of the grant of the patent: **10.01.2018**
(21) Application number: 11731189.4
(22) Date of filing: 08.06.2011
(51) Int. Cl.: C23C 18/12

(54) **CORROSION RESISTANT SOL-GEL COATING AND COMPOSITION AND PROCESS FOR MAKING THE SAME**
KORROSIONSBESTÄNDIGE SOL-GEL-BESCHICHTUNG, ZUSAMMENSETZUNG SOWIE HERSTELLUNGSVERFAHREN DAFÜR
REVÊTEMENT SOL-GEL RÉSISTANT À LA CORROSION, COMPOSITION ET PROCÉDÉ DE PRODUCTION CORRESPONDANT

(30) Priority: 08.06.2010 US 352541 P
(43) Date of publication of application: 17.04.2013
(73) Proprietor: Henkel AG & Co. KGaA, 40589 Düsseldorf (DE)
(72) Inventor: KRAMER, Kirk, West Bloomfield Michigan 48322 (US); SALET, Lisa, K., Sterling Heights Michigan 48310 (US); DOLAN, Shawn, E., Sterling Heights Michigan 48312 (US); SCALERA, Patrick, A., Canton Michigan 48188 (US)
(86) International application number: PCT/US2011/039539
(87) International publication number: WO 2011/156438

(56) References cited:
- EP-A2- 1 780 313
- US-A- 5 869 140
- US-A1- 2003 024 432
- US-A1- 2009 148 711
- US-A1- 2009 192 251

## Description

### BACKGROUND OF THE INVENTION

### 1. Field of the Invention

The present invention relates to a method for sol-gel surface coating that imparts corrosion resistance to metal substrates that comprise aluminum and copper and have metal oxide coating selected from oxides of Ti and Zr thereon.

### 2. Background Art

Sol-gel coatings have been used as conversion coatings for aluminum and other metal substrates such as ferrous and zinc substrates. One particular use of sol-gel coatings has been in the aerospace industry. For instance, sol-gel coatings have been applied to substrates particular to that industry, such as aluminum and titanium alloys, as an adhesion promoter between the underlying substrate and a paint primer, such as an epoxy primer. In addition to being an adhesion promoter, sol-gel coatings can provide good corrosion resistance, particularly on aluminum substrates, when the coating is baked.

In this context US 2009/0148711 A1 discloses sol-gel coatings as an alternative wet chemical treatment that confers corrosions resistance to the underlying metal substrate used in aviation industry. The sol-gel coatings are provided through aqueous compositions comprising one organometallic compound of zirconium, aluminium or titanium as well as an organosilane and yet another compound selected from acids, bases, glycols and ethoxyethanol.

Typical sol-gel bake systems are 100° Celsius to 250° Celsius. However, when sol-gel coatings are used on aircraft, typical sol-gel coatings are not particularly suitable since it is not considered advantageous to expose aircraft substrates to temperatures necessary to achieve baking. The same sol-gel coatings that have good corrosion resistance at the high bake temperatures tend not to perform well when cured in ambient conditions, such as at room temperature, which is the preferred temperature for curing a composition used on the exterior of an aircraft.

Accordingly, it would be advantageous to provide a sol-gel coating that can have favorable corrosion resistance when cured at temperatures less than 100° Celsius and, preferably around room temperature. Moreover, it would also be desirable if such a coating had good corrosion resistance performance at elevated cured temperatures.

In addition, the corrosion-resistance of aluminum alloys, such as AA2024-T3, covered by a metal oxide coating, such as titanium oxide and zirconium oxide, is more of a challenge due to the high copper content.

Accordingly, it would be advantageous to provide a seal for such metal oxide coatings on these aluminum alloys with better corrosion resistance.

### SUMMARY OF THE INVENTION

It has been found that certain aqueous sol-gel compositions containing acid, metal acetate, and organosilane provide sol-gel coatings that can have favorable corrosion resistance when cured at temperatures less than 100° Celsius, such as room temperature.

The present invention comprises a method for improving corrosion resistance of a metallic substrate that comprises aluminum and copper and has a metal oxide coating selected from metal oxides of Ti and Zr thereon. The method comprises providing a sol-gel composition comprising acid, metal acetate selected from zirconium acetate, magnesium acetate, or a combination thereof, organosilane, water and optionally a surfactant. Said sol-gel composition comprises 1.75 - 8.0 weight percent acid, 1.5 - 8.0 weight percent metal acetate selected from zirconium acetate, magnesium acetate, or a combination thereof, 10 - 50 weight percent organosilane, 35 - 90 weight percent water, and 0 - 1 weight percent surfactant. In another embodiment, the sol-gel composition comprises 2 - 4.0 weight percent acid, 1.75 - 4.0 weight percent metal acetate selected from zirconium acetate, magnesium acetate, or a combination thereof, 10 - 25 weight percent organosilane, 65 - 88 weight percent water, and 0 - 0.25 weight percent surfactant. Unless stated to the contrary, these and other weight percents are based on actives.

In a preferred embodiment, the present invention comprises the method that makes use of a sol-gel composition comprising glacial acetic acid, metal acetate selected from zirconium acetate, magnesium acetate, or a combination thereof, glycidoxypropyl trimethoxy silane, water and optionally a surfactant. In this embodiment, the sol-gel composition comprises 1.75 - 8.0 weight percent glacial acetic acid, 1.5 - 8.0 weight percent metal acetate selected from zirconium acetate, magnesium acetate, or a combination thereof, 10 - 50 weight percent of an epoxy silane, such as glycidoxypropyl trimethoxy silane, 35 - 90 weight percent water, and 0 - 1 weight percent surfactant. In another embodiment, the sol-gel composition comprises 2 - 4.0 weight percent glacial acetic acid, 1.75 - 4.0 weight percent metal acetate selected from zirconium acetate, magnesium acetate, or a combination thereof, 10 - 25 weight percent of an epoxy silane, 65 - 88 weight percent water, and 0 - 0.25 weight percent surfactant.

### DETAILED DESCRIPTION OF THE PREFERRED EMBODIMENT(S)

Except in the examples, or where otherwise expressly indicated, all numerical quantities in this description indicating amounts of material or conditions of reaction and/or use are to be understood as modified by the word "about" in describing the broadest scope of the invention. Except where otherwise expressly indicated, all weight percents herein are to be understood to be based on percent solids. Practice within the numerical limits stated is generally preferred. Also, unless expressly stated to the contrary: percent, "parts of", and ratio values are by weight; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed; specification of materials in ionic form implies the presence of sufficient counterions to produce electrical neutrality for the composition as a whole, and any counterions thus implicitly specified should preferably be selected from among other constituents explicitly specified in ionic form, to the extent possible; otherwise such counterions may be freely selected, except for avoiding counterions that act adversely to the objects of the invention; the term "mole" means "gram mole", "mole" and its variations may be applied herein to ionic or any other chemical species with defined numbers and types of atoms, as well as to chemical substances with well defined conventional molecules; the first definition of an acronym or other abbreviation applies to all subsequent uses herein of the same abbreviation and applies *mutatis mutandis* to normal grammatical variations of the initially defined abbreviation; and, unless expressly stated to the contrary measurement of a property is determined by the same technique as previously or later referenced for the same property.

The present invention comprises a method for improving corrosion resistance of a metallic substrate that comprises aluminum and copper and has a metal oxide coating selected from metal oxides of Ti and Zr thereon, the method comprising:
providing an aqueous organo sol-gel composition comprising:
   1.75 to 8.0 weight percent of an acid;
   1.5 to 8 weight percent of a metal acetate selected from zirconium acetate, magnesium acetate, or a combination thereof;
   10 to 50 weight percent of an organosilane;
   0 to 1 weight percent of an surfactant and
   water;
depositing the composition on the metal oxide to form a seal over the oxide coating, wherein the step of depositing the composition comprises spraying the composition over the oxide coating; and allowing the composition to dry to form a sol-gel coating on the substrate.
In this embodiment, the sol-gel composition comprises at least, in order of increasing preference 1.75, 1.8, 1.9, 2.0, 2.1, 2.25, 2.5, 2.75, 3.0, or 3.5 weight percent acid and not more than in increasing order of preference about 8.0, 7.5, 7.0, 6.5, 6.0, 5.5, 5.0, 4.5, or 4.0 weight percent acid; at least, in order of increasing preference 1.5, 1.6, 1.7, 1.75, 1.8, 1.9, 2.0, 2.1, 2.25, 2.5, 2.75, 3.0, or 3.5 weight percent metal acetate selected from zirconium acetate, magnesium acetate, or a combination thereof and not more than in increasing order of preference about 8.0, 7.5, 7.0, 6.5, 6.0, 5.5, 5.0, 4.5, or 4.0 weight percent metal acetate selected from zirconium acetate, magnesium acetate, or a combination thereof; at least, in order of increasing preference 10, 12, 14, 16, 18, 20, 22, 23, 24, or 25 weight percent organosilane and not more than in increasing order of preference 50, 45, 40, 35, 30, 29, 28, 27, or 26 weight percent organosilane; at least, in order of increasing preference 35, 40, 45, 50, 55, 60, or 65 weight percent water and not more than in increasing order of preference 90, 85, 80, 75, 70, 68, or 66 weight percent water; and 0 - 1 weight percent surfactant. Generally when optional surfactant is used, it is present in an amount of at least, in order of increasing preference 0.001, 0.01, 0.1, 0.2, or 0.25 weight percent and not more than in increasing order of preference 1, 0.75, 0.50, or 0.30 weight percent. In one embodiment, the sol-gel composition comprises 2 - 4.0 weight percent acid, 1.75 - 4.0 weight percent metal acetate, 10 - 25 weight percent organosilane, 65 - 88 weight percent water, and 0 - 0.25 weight percent surfactant.

In at least one embodiment, the pH of the composition is 2.5 - 5, in other embodiments 3 - 4, and in yet other embodiments 3.2 - 3.5.

Any suitable acid can be used. In at least one embodiment, glacial acetic acid is preferred. In other embodiments, fluorozirconic acid, hydrochloric acid, sulfuric acid, nitric acid, phosphoric acid, and combinations thereof could be used either in addition to, or in place of, glacial acetic acid.

In a particularly preferred embodiment, the metal acetate is zirconium acetate or magnesium acetate.

Any suitable organosilane can be used. In at least certain embodiments, organosilanes that are hydrolysable at room temperature have been found to be particularly suitable. In at least one embodiment, the organosilane is an epoxy silane or an amine silane.

While any suitable epoxy silane can be used, examples of certain suitable ones include, but are not limited to, glycidoxymethyltrimethoxysilane, 3-glycidoxypropyltrihydroxysilane, 3-glycidoxypropyl-dimethylhydroxysilane, 3-glycidoxypropyltrimethoxysilane, 3-glycidoxypropyl triethoxysilane, 3-glycidoxypropyldimethoxymethylsilane, 3-glycidoxypropyldimethyl-methoxysilane, 3-glycidoxypropyltributoxysilane, 1,3-bis(glycidoxypropyl) tetramethyldisiloxane, 1,3-bis(glycidoxypropyl)tetramethoxydisiloxane, 1,3-bis(glycidoxypropyl)-1,3-dimethyl-1,3-dimethoxydisiloxane, 2,3-epoxypropyl-trimethoxysilane, 3,4-epoxybutyl-trimethoxysilane, 6,7-epoxyheptyl-trimethoxysilane, 9,10-epoxydecyltrimethoxysilane, 1,3-bis(2,3-epoxypropyl) tetramethoxydisiloxane, 1,3-bis(6,7-epoxyheptyl)tetra-methoxydisiloxane, 2-(3,4-epoxycyclohexyl)ethyltrimethoxysilane, and the like.

Any suitable amine silane can be used. Examples of suitable amine silanes include, but are not limited to, 3-aminopropyl trimethoxysilane and 3-aminopropyl triethoxysilane.

It should be understood that other conventional sol-gel components, such as solvents, corrosion inhibitors, defoamers, UV-stabilizers, extenders, plasticizers, and pigments as are known in the art, may be included in the composition.

While any suitable solvent can be used, it has been found in at least certain embodiments that ethylene glycol monobutyl ether is a particularly suitable solvent. Other suitable solvents include those that have found particular utility in water borne coating technologies. Examples of other suitable solvents include, but are not limited to, alcohols, such as methanol and ethanol, glycols, such as dipropylene glycol, and other glycol ethers, such as propylene glycol monobutyl ether and dipropylene glycol monobutyl ether.

In one preferred embodiment, the present invention comprises a sol-gel composition comprising glacial acetic acid, metal acetate selected from zirconium acetate, magnesium acetate, or a combination thereof, glycidoxypropyl trimethoxy silane, water and optionally a surfactant. In this embodiment, the sol-gel composition comprises 1.75 - 8.0 weight percent glacial acetic acid, 1.5 - 8.0 weight percent metal acetate selected from zirconium acetate, magnesium acetate, or a combination thereof, 10 - 50 weight percent of an epoxy silane, such as glycidoxypropyl trimethoxy silane, 35 - 90 weight percent water, and 0 - 1 weight percent surfactant. In another embodiment, the sol-gel composition comprises 2 - 4.0 weight percent glacial acetic acid, 1.75 - 4.0 weight percent metal acetate selected from zirconium acetate, magnesium acetate, or a combination thereof, 10 - 25 weight percent of an epoxy silane, 65 - 88 weight percent water, and 0 - 0.25 weight percent surfactant.

The coating compositions can be applied in any suitable manner. In at least one embodiment, the coating composition is spray applied over aluminum substrates. According to the invention, the coating composition has been found to be particularly effective as a seal for metal oxide corrosion resistant coatings of Ti and Zr on aluminum alloy substrates. The use of the coating composition as a seal for oxide (corrosion resistant) coated alloys has been found to be particularly effective at increasing the corrosion resistance of copper containing aluminum alloys, such as AA2024-T3.

The coating composition can be prepared in any suitable manner. In one embodiment, the coating composition can generally be prepared by combining the water with the acid with the metal acetate and optionally with a surfactant and then within 15 to 60 minutes of use, the silane is added to allow for the hydrolysis of the silane to begin. The coating compositions are allowed to air dry at room temperature. Any suitable coating thickness can be employed, however it has been found that coating thicknesses of 0.6 to 2.5 microns have worked particularly well.

In one particular embodiment, the sol-gel composition is provided as a 2 component (2K) product. The first part (Part A) is comprised of most of the formula, including the acid and the metal acetate. The second part (Part B) comprises the silane and optionally any components which do not negatively effect stability of Part B, e.g., those that do not cause silane hydrolysis. These two parts are kept separate until just before application. Upon mixing, the silane begins hydrolysis and the mixture is applied to the substrate.

In one embodiment, the general formula by weight in grams is:

| | | |
|---|---|---|
| Part A | DI Water | 84.2 |
| | Glacial Acetic Acid | 3.25 |
| | Surfactant | 0.05 |
| | Zirconium Acetate (various metal acetates can be used here such as Zr or Mg. | 12.5 |

| | | |
|---|---|---|
| Part B | Glycidoxypropyl Trimethoxy Silane | 20 |

The following is an exemplary process for making Part A:
1. Add the water to a clean vessel and start agitator
2. Add glacial acetic acid and mix for 5 minutes
3. Add surfactant and mix for 5 minutes
4. Add zirconium acetate and mix for 15 minutes

The order of addition is not critical in this product. However, in one embodiment, it is preferred that the acid is added to the water rather than the other way around.

In the case of magnesium acetate, it should be added to water so it will dissolve (it is a solid raw material).

Part B can be added into Part A and mixed. Once the product is mixed, it should be allowed a 30 minute induction time, remixed, and then used.

Below are particularly preferred embodiments of sol-gel formulas normalized to 100 grams total formula weight or metal portion.

| **Zirconium Based** | | |
|---|---|---|
| Part A | Weight (g) | Weight % |
| DI Water | 84.2 | 70.17 |
| Glacial Acetic Acid | 3.25 | 2.71 |
| Surfactant | 0.05 | 0.04 |
| Zirconium Acetate (about 25% solids in water-based solution) | 12.5 | 10.42 |

| Part B | | |
|---|---|---|
| Glycidoxypropyl Trimethoxy Silane | 20 | 16.67 |
| Total | 120 | 100 |

| **Magnesium Based** | | |
|---|---|---|
| Part A | | |
| DI Water | 94.47 | 78.73 |
| Glacial Acetic Acid | 3.25 | 2.71 |
| Surfactant | 0.05 | 0.04 |
| Magnesium Acetate | 2.23 | 1.86 |

| Part B | | |
|---|---|---|
| Glycidoxypropyl Trimethoxy Silane | 20 | 16.67 |
| Total | 120 | 100 |

### EXAMPLES

Metal oxide coatings, such as titanium oxide and zirconium oxide, are good corrosion resistant coatings on most aluminum alloys. However AA2024-T3, due to the high copper content, is more of a challenge. It has been found, as will be shown by the following example, that sealing metal oxide coated AA2024-T3 substrate with a sol-gel product allows the total process to surpass the corrosion requirements needed for AA2024-T3 applications. Sealing with sol-gels based on this technology can offer a significant improvement over other types of sealing techniques.

Metal oxide coated panels were prepared on AA2024-T3 panels (8 inches by 3 inches). The panels were coated with 4 variations of a sol-gel formulation, mainly varied by concentration.

The formula variations can be seen in the table below

| | Wt. (g) | | | |
|---|---|---|---|---|
| Component | A - Control | B-2X | C-5X | D-15X |
| Glacial Acetic Acid | 0.65 | 1.3 | 3.25 | 9.75 |
| DI Water | 196.748 | 193.592 | 184.124 | 152.564 |
| Surfactant | 0.096 | 0.096 | 0.096 | 0.096 |
| Zirconium acetate hydroxide solution | 2.506 | 5.012 | 12.53 | 37.59 |
| Total - Part 1 | 200 | 200 | 200 | 200 |
| Total - Part 2 | 3.836 | 7.672 | 19.18 | 57.54 |

Each of these coatings were applied over the metal oxide on AA2024-T3. Then some samples were allowed to air dry and then cured in an oven at 100°C for 30 minutes (baked), and some were placed directly into the oven (baked) after sol-gel application. The panels are identified as follows:
A - Composition A applied over metal oxide and air dried vertically prior to bake;
B - Composition B applied over metal oxide and air dried vertically prior to bake;
C - Composition C applied over metal oxide and air dried vertically prior to bake;
D - Composition D applied over metal oxide and air dried vertically prior to bake;
E - no sol-gel coating applied. This is a control metal oxide panel over AA2024-T3;
F - Composition D applied over metal oxide and air dried horizontally prior to bake;
G - Composition A applied over metal oxide and directly placed in the vertically oven to bake;
H - Composition B applied over metal oxide and directly placed in the oven vertically to bake;
I - Composition C applied over metal oxide and directly placed in the oven vertically to bake;
J - Composition D applied over metal oxide and directly placed in the oven vertically to bake.

After the sol-gels were applied, the panels were subjected to 500 hours in a salt spray chamber according to ASTM B117. Panels were not rated for corrosion pits, as pits are not usually as evident on the surface of metal oxide coatings as they are aluminum. Results were recorded for corrosion (or discoloration) and a qualitative evaluation of the degree of corrosion was made. The results are observed as follows:
A - General corrosion over the entire panel, not localized to one area;
B - Corrosion mainly at the bottom of the panel, or the area of the panel that had a slightly thinner sol-gel coating due to coating flow while hung vertically;
C - No corrosion at all on the panel;
D - No corrosion at all on the panel;
E - Corrosion over the entire panel;
F - No corrosion at all on the panel;
G - General corrosion over the entire panel, not localized to one area;
H - Corrosion mainly at the bottom of the panel, or the area of the panel that had a slightly thinner sol-gel coating due to coating flow while hung vertically;
I - No corrosion at all on the panel; and
J - No corrosion at all on the panel.

Sol-gel samples C and D appeared to provide a good seal over metal oxide coated AA2024-T3 panels regardless if the panels were air-dried vertically or horizontally and regardless if they were air dried or went directly into the bake over after sol-gel application.

The sol-gel coated panels provided corrosion protection to at least 500 hours salt spray hours. This is in excess of salt spray performance of metal oxide alone without a sol-gel seal on such substrates.

## Claims

1. A method for improving corrosion resistance of a metallic substrate that comprises aluminum and copper and has a metal oxide coating selected from metal oxides of Ti and Zr thereon, the method comprising:
providing an aqueous organo sol-gel composition comprising:
1.75 to 8.0 weight percent of an acid;
1.5 to 8 weight percent of a metal acetate selected from zirconium acetate, magnesium acetate, or a combination thereof;
10 to 50 weight percent of an organosilane;
0 to 1 weight percent of an surfactant and
water;
depositing the composition on the metal oxide to form a seal over the oxide coating, wherein the step of depositing the composition comprises spraying the composition over the oxide coating; and
allowing the composition to dry to form a sol-gel coating on the substrate.

2. The method of claim 1, wherein the acid of the composition comprises glacial acetic acid.

3. The method of claim 1, wherein the organosilane of the composition comprises glycidoxypropyl trimethoxy silane.

4. The method of claim 1, wherein the pH of the composition is between 2.5 and 5.

5. The method of claim 1, wherein the sol-gel coating being disposed on the metal oxide coating has a thickness of 0.6 to 2.5 microns.

## Patentansprüche

1. Verfahren zum Verbessern von Korrosionsbeständigkeit eines metallischen Substrats, das Aluminium und Kupfer umfasst und eine Metalloxidbeschichtung darauf aufweist, die aus Metalloxiden aus Ti und Zr ausgewählt ist, wobei das Verfahren umfasst:
Bereitstellen einer wässrigen organischen Sol-Gel-Zusammensetzung, umfassend:
1,75 bis 8,0 Gewichtsprozent einer Säure;
1,5 bis 8 Gewichtsprozent eines Metallacetats, ausgewählt aus Zirconiumacetat, Magnesiumacetat und einer Kombination daraus;
10 bis 50 Gewichtsprozent eines Organosilans;
0 bis 1 Gewichtsprozent eines Tensids und
Wasser;
Abscheiden der Zusammensetzung auf dem Metalloxid, um eine Dichtung über der Oxidbeschichtung auszubilden,
wobei der Schritt des Abscheidens der Zusammensetzung das Sprühen der Zusammensetzung über die Oxidbeschichtung umfasst; und
Ermöglichen, dass die Zusammensetzung trocknet, um eine Sol-Gel-Beschichtung auf dem Substrat auszubilden.

2. Verfahren nach Anspruch 1, wobei die Säure der Zusammensetzung Eisessig umfasst.

3. Verfahren nach Anspruch 1, wobei das Organosilan der Zusammensetzung Glycidoxypropyltrimethoxysilan umfasst.

4. Verfahren nach Anspruch 1, wobei der pH-Wert der Zusammensetzung zwischen 2,5 und 5 beträgt.

5. Verfahren nach Anspruch 1, wobei die Sol-Gel-Beschichtung, die auf der Metalloxidbeschichtung angeordnet wird, eine Dicke von 0,6 bis 2,5 Mikrometer aufweist.

## Revendications

1. Procédé d'amélioration de la résistance à la corrosion d'un substrat métallique qui comprend de l'aluminium et du cuivre et a un revêtement en oxyde métallique choisi parmi les oxydes métalliques de Ti et Zr, le procédé comprenant :
la fourniture d'une composition aqueuse organique sol-gel contenant :
1,75 à 8,0 % en poids d'un acide ;
1,5 à 8 % en poids d'un acétate métallique choisi parmi l'acétate de zirconium, l'acétate de magnésium, ou un de leurs mélanges ;
10 à 50 % en poids d'un organosilane ;
0 à 1 % en poids d'un tensioactif ; et
de l'eau ;
le dépôt de la composition sur l'oxyde métallique pour former une surface d'étanchéité sur le revêtement d'oxyde,
l'étape de dépôt de la composition comprenant de pulvériser la composition sur le revêtement d'oxyde ; et
laisser la composition sécher pour former un revêtement sol-gel sur le substrat.

2. Procédé selon la revendication 1, dans lequel l'acide de la composition contient de l'acide acétique glacial.

3. Procédé selon la revendication 1, dans lequel l'organosilane de la composition comprend du glycidoxypropyl triméthoxy silane.

4. Procédé selon la revendication 1, dans lequel le pH de la composition se situe entre 2,5 et 5.

5. Procédé selon la revendication 1, dans lequel le revêtement sol-gel disposé sur le revêtement d'oxyde métallique a une épaisseur entre 0,6 et 2,5 microns.
